# EUROPEAN PATENT APPLICATION

(11) **EP 2 372 429 A1**
(43) Date of publication of application: **05.10.2011**
(21) Application number: 09830353.0
(22) Date of filing: 27.11.2009
(51) Int. Cl.: G02B 7/04, H02N 10/00

(54) **DRIVING MODULE AND ELECTRONIC DEVICE**

(30) Priority: 01.12.2008 JP 2008306274
(71) Applicant: Seiko Instruments Inc., Chiba-shi Chiba 261-8507 (JP)
(72) Inventor: NOBE, Tetsuya, Chiba-shi Chiba 261-8507 (JP)
(74) Representative: Cloughley, Peter Andrew
(86) International application number: PCT/JP2009/070047
(87) International publication number: WO 2010/064586

(57) **Abstract**

A drive module includes: a cylindrical or columnar driven body 4; a cylindrical supporting body 5 for containing the driven body therein; flat spring members 6, 7 for elastically holding the driven body movably along a certain direction with respect to the supporting body; and a drive means 10 for driving the driven body against a restoring force of the flat spring members, in which the spring constant of the side of the flat spring members on which a force generated by the drive means acts is larger than that of the opposite side on which the force generated by the drive means acts through the driven body.

## Description

### Technical Field

The present invention relates to drive modules and electronic devices. For example, the invention relates to a drive module and an electronic device suitable for driving an optical system or movable member to adjust a focal position or suitable for an actuator.

### Background Art

Until now, in the field of small electronic devices including a camera-equipped mobile phone, various drive modules have been proposed that use the expansion/contraction of a shape-memory alloy wire to drive a driven body such as an imaging lens unit (for example, see Patent Document 1).

For example, as shown in Fig. 12, a drive unit 100 in Patent Document 1 uses a plurality of flat springs 101 to support a lens movably in the optical axis direction. Also, both ends of a shape-memory alloy wire 102 are supported by a supporting body 103, and a generally center part of the shape-memory alloy wire is hooked on a hook 105 of a driven body 104. Then, when power is supplied to the shape-memory alloy wire 102, the shape-memory alloy wire 102 is heated to contract, allowing the driven body 104 to be vertically moved.

### Prior Art Document

### Patent Document

Patent Document 1: WO 07/113478

### Summary of the Invention

### Problems to be Solved by the Invention

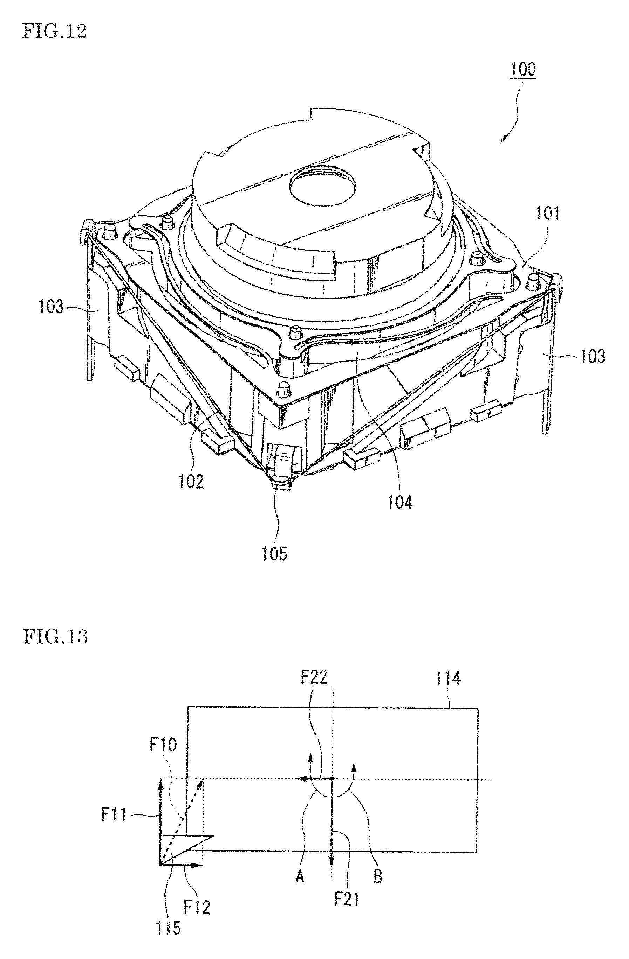

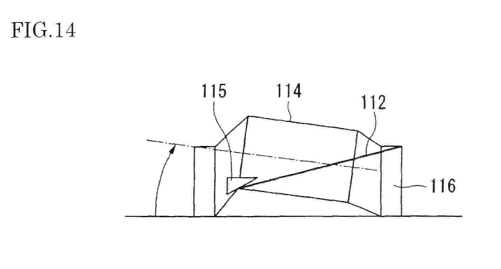

By the way, the drive unit of Patent Document 1 requires two sets of the hook 105 and the shape-memory alloy wire 102 in order to move the driven body 104 along the axis direction, which makes the structure complicated. Also, it is difficult to drive two shape-memory alloy wires 102 each with the same strength, which may tilt the driven body 104. On the other hand, a structure of driving the driven body 104 using one shape-memory alloy wire 102 is simpler and can be more easily controlled, but, since the driven body 104 is cantilever-supported, the hook side on which the hook 105 is formed is lifted and the opposite side is lowered, which may tilt the optical axis. When the optical axis is largely tilted, a problem such as what we call "one sided out-of-focus" (one side of an imaged image falls out of focus) may arise.
Specifically, as shown in Fig. 13, when a shape-memory alloy wire 112 (see Fig. 14) is hooked on a hook 115 of a driven body 114 and the shape-memory alloy wire 112 is caused to contract in order to vertically move the driven body 114, the contraction of the shape-memory alloy wire 112 causes a force F10. Accordingly, a force F11 is generated in the vertical direction (axis direction), and a force F12 is generated in the horizontal direction.
On the other hand, when the driven body 114 is caused to be lifted, a flat spring (not shown) disposed on the top surface of the driven body 114 causes a downward force F21 from the position of the center of gravity of the driven body 114. This is because the flat spring is formed so that a force is uniformly applied in the circumference direction of the driven body 114 so as not to deviate the axis direction of a lens mounted on the driven body 114. Thus, the force F21 is generated downward from the center of gravity of the driven body 114. Also, in response to the force F12 in the horizontal direction due to the contraction of the shape-memory alloy wire 112, the flat spring functions to prevent the driven body 114 from being deviated in the horizontal plane so as not to deviate the axis direction of the lens mounted on the driven body 114, which causes a force F22 repelling the force F12. As a result, the driven body 114 is subjected to a moment A due to the forces F11 and F21 in the vertical direction and a moment B due to the forces F12 and F22 in the horizontal direction. The directions of the moments A and B are opposite to each other. However, since the force in the vertical direction is stronger, the magnitude of the moment A is larger than that of the moment B. Thus, as shown in Fig. 14, the driven body 114 becomes tilted with respect to a supporting body 116.
Alternatively, the shape-memory alloy wire may also be disposed on the opposite side to cause the shape-memory alloy wire to contract at the two opposite locations, allowing the driven body to move in the axis direction. However, this requires more parts and makes the downsizing of the module difficult.

In view of the above, the invention provides a drive module and an electronic device having a compact body and allowing a driven body to move along the axis direction without being tilted.

### Means for Solving the Problems

In order to solve the above problem, the invention provides the following means.
A drive module in accordance with the invention includes: a cylindrical or columnar driven body; a cylindrical supporting body for containing the driven body therein; a flat spring member for elastically holding the driven body movably along a certain direction with respect to the supporting body; and a drive means for driving the driven body against a restoring force of the flat spring member, characterized in that the spring constant of the side of the flat spring member on which a force generated by the drive means acts is larger than that of the opposite side on which the force generated by the drive means acts through the driven body.

With this configuration, when the drive means causes the driven body to move, the side on which the force generated by the drive means acts is less movable than the side opposite the side on which the force generated by the drive means acts. This can prevent the amount of movement of the side of the driven body on which the force generated by the drive means acts from increasing to tilt the driven body. Thus, the driven body can be moved along the axis direction without tilting. This can be achieved without increasing the number of parts, only by partially adjusting the spring constant of the flat spring member as described above, which can keep the drive module compact.

Furthermore, the drive module is characterized in that the drive means includes a shape-memory alloy wire that is engaged with the driven body and, when powered, is displaced by heat to drive the driven body against the restoring force of the flat spring member.

With this configuration, when both ends of the shape-memory alloy wire are supported by supporting bodies and the shape-memory alloy wire is engaged with the engaging point of the driven body, the shape-memory alloy wire can be displaced to relatively move the driven body with respect to the supporting bodies. That is, only providing the shape-memory alloy wire allows the driven body to be moved. Thus, the driven body can be moved with a simple configuration.
Furthermore, the drive module is characterized in that the flat spring member includes: an opening corresponding to the outline of the driven body; a first spring part and second spring part formed along the opening by almost a quarter arc for each spring part centering a first support that is a point of action on which the force generated by the drive means acts; and a third spring part and fourth spring part formed along the opening by almost a quarter arc for each spring part centering a second support that is formed opposite to the first support with the opening therebetween, and characterized in that the thickness of the first spring part is larger than that of the third spring part.

With this configuration, the spring constant of the first spring part is larger than that of the third spring part. This can prevent the amount of movement of the first support side of the driven body on which the force generated by the drive means acts from increasing to tilt the driven body. Thus, the driven body can be moved along the axis direction without tilting.

Furthermore, the drive module is characterized in that the flat spring member includes: an opening corresponding to the outline of the driven body; a first spring part and second spring part formed along the opening by almost a quarter arc for each spring part centering a first support that is a point of action on which the force generated by the drive means acts; and a third spring part and fourth spring part formed along the opening by almost a quarter arc for each spring part centering a second support that is formed opposite to the first support with the opening therebetween, and characterized in that the width of the first spring part is larger than that of the third spring part.

With this configuration, the spring constant of the first spring part is larger than that of the third spring part. This can prevent the amount of movement of the first support side of the driven body on which the force generated by the drive means acts from increasing to tilt the driven body. Thus, the driven body can be moved along the axis direction without tilting.

Also, enlarging the width of the first spring part can prevent the driven body from moving in the direction perpendicular to the axis direction. Thus, the driven body can be more surely moved along the axis direction without tilting.

Furthermore, the drive module is characterized in that the flat spring member includes: an opening corresponding to the outline of the driven body; a first spring part and second spring part formed along the opening by almost a quarter arc for each spring part centering a first support that is a point of action on which the force generated by the drive means acts; and a third spring part and fourth spring part formed along the opening by almost a quarter arc for each spring part centering a second support that is formed opposite to the first support with the opening therebetween, and characterized in that the length of the first spring part is smaller than that of the third spring part.

With this configuration, the spring constant of the first spring part is larger than that of the third spring part. This can prevent the amount of movement of the first support side of the driven body on which the force generated by the drive means acts from increasing to tilt the driven body. Thus, the driven body can be moved along the axis direction without tilting.

Furthermore, the drive module is characterized in that the spring constant of the first spring part is the same as that of the second spring part, and the spring constant of the third spring part is the same as that of the fourth spring part.

With this configuration, the spring constant of the first spring part and second spring part is larger than that of the third spring part and fourth spring part. This can prevent the amount of movement of the first support side of the driven body on which the force generated by the drive means acts from increasing to tilt the driven body. Thus, the driven body can be moved along the axis direction without tilting.

Furthermore, the first spring part and the second spring part have the same spring constant, and the third spring part and the fourth spring part have the same spring constant, which can prevent the driven body from moving in the direction perpendicular to the axis direction. Thus, the driven body can be more surely moved along the axis direction without tilting.

Furthermore, the drive module is characterized in that: the flat spring member is provided on the top and bottom surfaces of the driven body perpendicular to the axis direction along which the driven body is driven so that the restoring force of the flat spring member acts on the top and bottom surfaces of the driven body; and the upper spring constant of the flat spring member provided on the top surface is the same as the lower spring constant of the flat spring member provided on the bottom surface.

With this configuration, since one pair of (two) flat spring members having the same spring constant are used, the driven body can be stably moved along the axis direction without tilting. Also, for example, the flat spring members in the same shape can be used, which can prevent the manufacturing cost from increasing.
Furthermore, the drive module is characterized in that: the flat spring member is provided on the top and bottom surfaces of the driven body perpendicular to the axis direction along which the driven body is driven so that the restoring force of the flat spring member acts on the top and bottom surfaces of the driven body; and the upper spring constant of the flat spring member provided on the top surface is larger than the lower spring constant of the flat spring member provided on the bottom surface.

This configuration can prevent the driven body from tilting and can prevent the driven body from moving in the direction perpendicular to the axis direction. Thus, the driven body can be more surely moved along the axis direction without tilting.

Furthermore, an electronic device in accordance with the invention is characterized by including the drive module as described above.

The electronic device in accordance with the invention includes the compact drive module that can move the driven body in the axis direction without tilting it, which can facilitate keeping the electronic device compact and can provide the electronic device that includes the high precision drive module and functions with high precision.

### Advantage of the Invention

According to the drive module in accordance with the invention, when the drive means causes the driven body to move, the side on which the force generated by the drive means acts is less movable than the side opposite the side on which the force generated by the drive means acts. This can prevent the amount of movement of the side of the driven body on which the force generated by the drive means acts from increasing to tilt the driven body. Thus, the driven body can be moved along the axis direction without tilting. This can be achieved without increasing the number of parts, only by partially adjusting the spring constant of the flat spring member as described above, which can keep the drive module compact.

### Brief Description of the Drawings

[Fig. 1] A perspective view of a drive module in accordance with an embodiment of the invention.
[Fig. 2] An exploded perspective view showing the configuration of the drive module in accordance with the embodiment of the invention.
[Fig. 3] An exploded perspective view showing the configuration of a drive unit in accordance with the embodiment of the invention.
[Fig. 4] A perspective view showing the drive unit in accordance with the embodiment of the invention.
[Fig. 5] A cross-sectional view along the line A-A in Fig. 4.
[Fig. 6] A plan view of a upper flat spring (lower flat spring) in accordance with a first embodiment of the invention.
[Fig. 7] An explanatory diagram explaining an effect when a lens frame is moved in accordance with the first embodiment of the invention.
[Fig. 8] A plan view of a first variation of the upper flat spring (lower flat spring) in accordance with the first embodiment of the invention.
[Fig. 9] A plan view of a second variation of the upper flat spring (lower flat spring) in accordance with the first embodiment of the invention.
[Fig. 10] An explanatory diagram explaining an effect when a lens frame is moved in accordance with a second embodiment of the invention.
[Fig. 11] Drawings of an electronic device in accordance with an embodiment of the invention: (a) front face perspective view, (b) rear face perspective view and (c) cross-sectional view along the line F-F in (b).
[Fig. 12] A perspective view of a conventional drive module.
[Fig. 13] An explanatory diagram explaining an effect when a conventional lens frame is moved.
[Fig. 14] An explanatory diagram explaining a problem when the conventional lens frame is moved.

### Mode for Carrying Out the Invention

### (First embodiment)

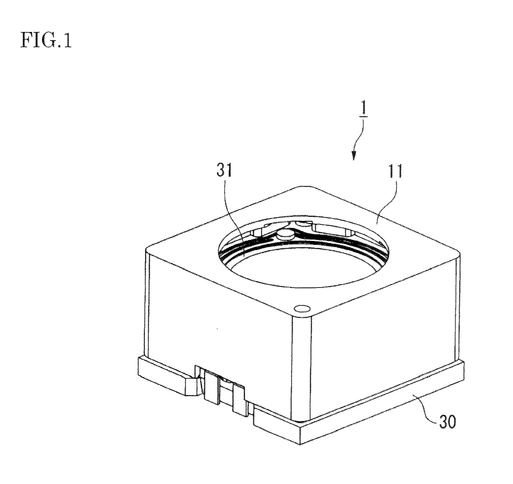

Now, a drive module in accordance with a first embodiment of the invention is described with reference to Figs. 1 to 9.

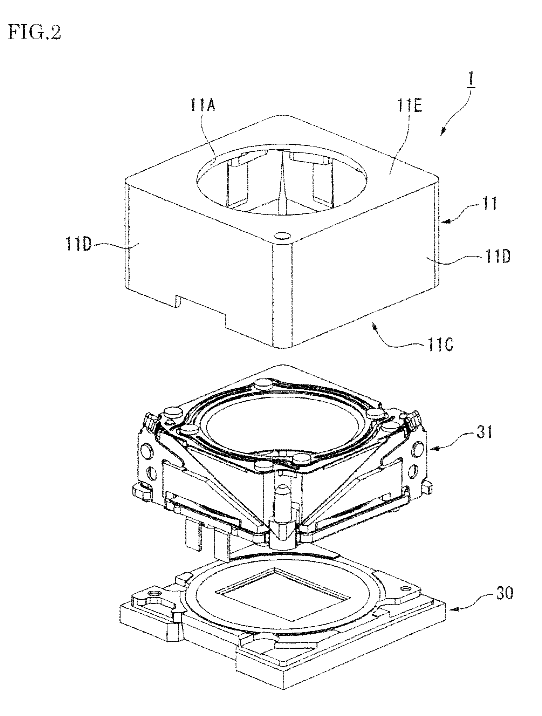

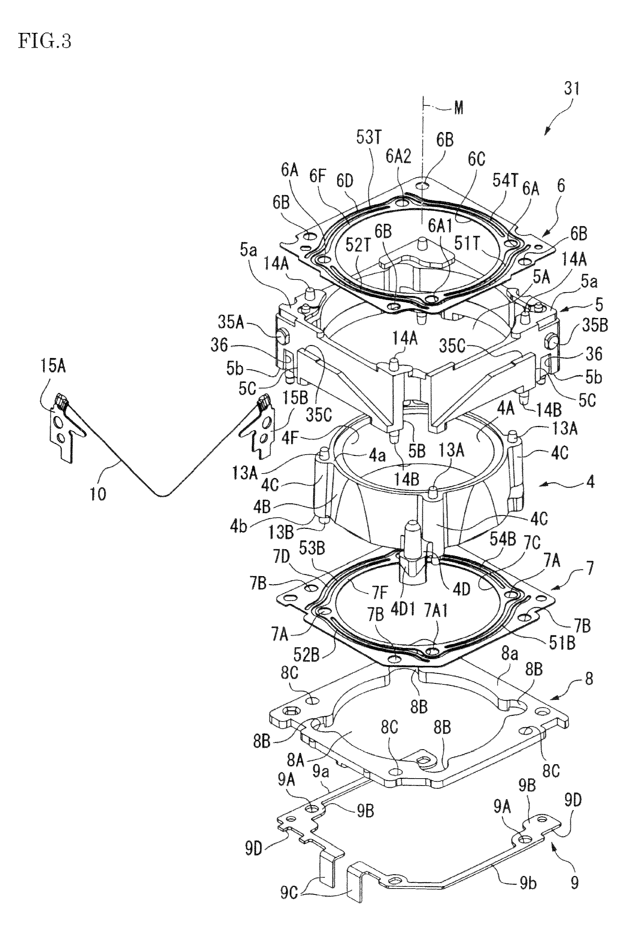

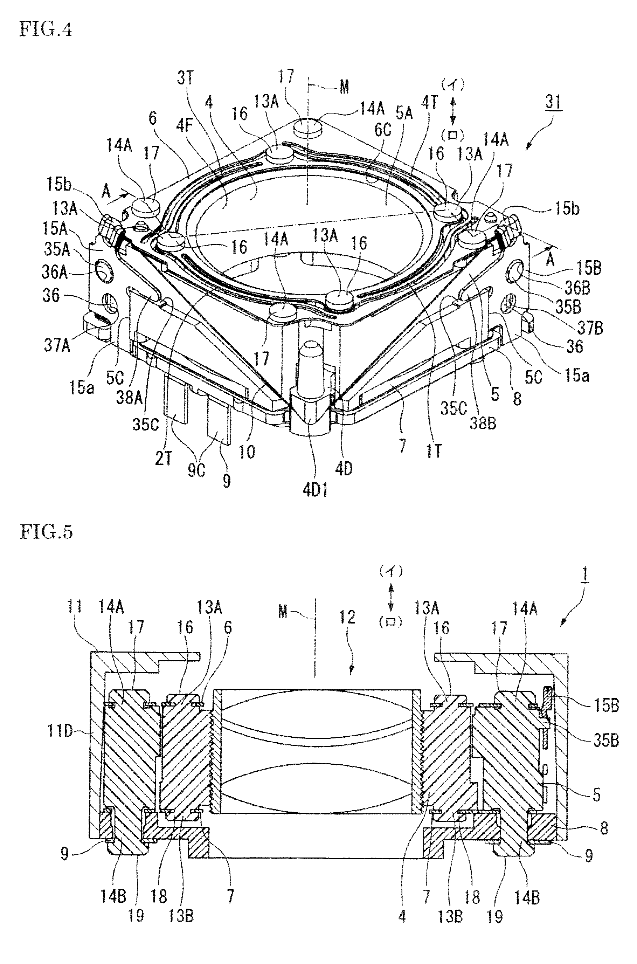

Fig. 1 is a perspective view of the drive module in accordance with the first embodiment of the invention. Fig. 2 is an exploded perspective view showing the schematic configuration of the drive module in accordance with the first embodiment of the invention. Fig. 3 is an exploded perspective view showing the schematic configuration of a drive unit in accordance with the first embodiment of the invention. Fig. 4 is a perspective view of the drive unit in accordance with the first embodiment of the invention. Fig. 5 is a cross-sectional view along the line A-A in Fig. 4. In some of the views, some constituent members, including a lens unit 12, are not shown as appropriate for clarity.

As shown in Figs. 1 and 2, a drive module 1 of the embodiment is formed in a box shape as a whole. The drive module 1 is installed in an electronic device or the like as a completed assembly. The drive module 1 is secured by fitting or adhesion to a board (not shown) that supplies control signals and power to the drive module 1. The drive module 1 includes an adapter 30 located on the board, a drive unit 31 disposed on the adapter 30 and a cover 11 disposed so as to cover the drive unit 31.

As shown in Fig. 3, the drive unit 31 includes, as main constituent members, a lens frame 4 as driven body, a module frame 5 as supporting body, an upper flat spring 6 and lower flat spring 7 as flat spring member, a module sub-plate 8, a powering member 9 and a shape-memory alloy (hereinafter referred to as "SMA") wire 10. These constituent members are integrally stacked to constitute an actuator.

As shown in Figs. 3 to 5, in assembling these members, the lens frame 4 is inserted into the module frame 5, then the upper flat spring 6 and the lower flat spring 7 are secured by staking while holding the lens frame 4 and the module frame 5 therebetween from the upper and lower directions on the figure, and then the module sub-plate 8 and the powering member 9 are stacked in this order and secured together by staking from underneath the module frame 5. Note that the stacked body of them is covered from the upper side by the cover 11 that is secured to the module sub-plate 8.

Note that "M" shown in the figures is a virtual axis line of the drive module 1 corresponding to the optical axis of the lens unit 12 (see Fig. 5), indicating the direction along which the lens frame 4 is driven. In the following description, for simplicity of explanation, even when individual exploded constituent members are described, a position or direction may be referred to based on the positional relationship with the axis line M in assembling. For example, even when an explicit circle or cylindrical surface does not exist in a constituent member, the direction along the axis line M may be simply referred to as "axis direction," and the radius direction and circumference direction of a circle with its center on the axis line M may be simply referred to as "radius direction" and "circumference direction," with no room for misunderstanding. Also, if not stated otherwise, the "vertical direction" refers to a vertical direction when the axis line M is disposed along the vertical direction and the mounting surface of the drive module 1 is directed downward in the vertical direction.

Among these constituent members, the lens frame 4 as driven body is formed cylindrically as a whole as shown in Fig. 3. A cylindrical containing part 4A is formed coaxially with the axis line M by boring through the center of the lens frame 4. On the inner circumference surface 4F of the containing part 4A, a female thread is formed (see Fig. 5). Then, the lens unit 12 can be threadably secured in the containing part 4A, the lens unit 12 holding an appropriate lens or lens group in a lens barrel on the outer circumference surface of which a male thread is formed.
On an outer wall surface 4B of the lens frame 4, four protrusions 4C protruding outward in the radius direction are formed extended in the axis direction at approximately 90 degree intervals in the circumference direction. On end faces 4a, 4b consisting of planes perpendicular to the axis line M at top and bottom ends of the protrusions 4C, four upper securing pins 13A and four lower securing pins 13B are provided that are protruding upward and downward along the axis line M, respectively. The upper securing pins 13A hold the upper flat spring 6, and the lower securing pins 13B hold the lower flat spring 7.

Although the position in plan view of each of the upper securing pins 13A may be different from that of each of the lower securing pins 13B, they are disposed on the same axis in parallel with the axis line M in this embodiment. Accordingly, insertion positions for the upper securing pins 13A in the upper flat spring 6 are in common with those for the lower securing pins 13B in the lower flat spring 7.

Although the center positions in the radius direction of the upper securing pins 13A and the lower securing pins 13B may be different, they are disposed on the same corresponding circumference in this embodiment. Accordingly, the center positions are arranged in a square grid.

In the outer side in the radius direction of the lens frame 4, a guide protrusion 4D is provided that is protruding outward in the radius direction from the bottom end of one of the protrusions 4C. As shown in Fig. 4, the guide protrusion 4D locks the SMA wire 10 to a tip hook 4D1. Then, the contraction of the SMA wire 10 moves the guide protrusion 4D by lifting upward to the direction of the arrow (A). Note that the lens frame 4 is molded in one piece from a thermoplastic resin (for example, polycarbonate (PC) resin, liquid crystal polymer (LCP) resin and the like) that can be subjected to heat staking or ultrasonic staking.

As shown in Fig. 3, the module frame 5 is a cylindrical member formed almost rectangular in outline in plan view as a whole and including a containing part 5A consisting of a through hole formed coaxially with the axis line M in the center of the module frame 5. The containing part 5A contains the lens frame 4.

In the four corners of the top part and bottom part of the module frame 5, end faces 5a, 5b are formed consisting of planes perpendicular to the axis line M. Then, four upper securing pins 14A are formed upward from the end faces 5a, and four lower securing pins 14B are formed downward from the end faces 5b.

The upper securing pins 14A hold the upper flat spring 6, and the lower securing pins 14B hold the lower flat spring 7, the module sub-plate 8 and the powering member 9. Although the position in plan view of each of the upper securing pins 14A may be different from that of each of the lower securing pins 14B, they are disposed on the same axis in parallel with the axis line M in this embodiment. Accordingly, insertion positions for the upper securing pins 14A in the upper flat spring 6 are in common with those for the lower securing pins 14B in the lower flat spring 7. The distance between the end faces 5a and 5b is set to be equal to the distance between the end faces 4a and 4b of the lens frame 4.

At the lower part of one corner of the module frame 5, a notch 5B is formed, the notch width in plan view of which allows the guide protrusion 4D of the lens frame 4 to be fit movably in the axial direction to the notch 5B. With the lens frame 4 contained in the module frame 5, inserted from underneath, the notch 5B allows the guide protrusion 4D of the lens frame 4 to pass through, allows the tip hook 4D1 of the guide protrusion 4D to project out of the module frame 5 in the radius direction, and allows the lens frame 4 to be positioned in the circumference direction.

In the two corners of the module frame 5 adjacent to the notch 5B, a pair of locking grooves 5C are formed on the side surfaces on the same side as the corner in which the notch 5B is provided, to which wire holding members 15A, 15B (see Figs. 3 and 4) for holding the SMA wire 10 are attached.
The wire holding members 15A, 15B are attached to the module frame 5 by inserting pins 35A, 35B formed on the side surfaces into the wire holding members 15A, 15B. On the side surfaces of the module frame 5 under the pins 35A, 35B, grooves 36 are formed that are filled with adhesive for securing the wire holding members 15A, 15B to the module frame 5. Also, wall parts 35C are formed that can prevent the wire holding members 15A, 15B from moving rotationally when the wire holding members 15A, 15B are secured to the module frame 5. The wall parts 35C are projected from the side surfaces of the module frame 5 sideward (in the direction perpendicular to the side surfaces). Note that, as with the lens frame 4 in this embodiment, the module frame 5 is molded in one piece from a thermoplastic resin (for example, polycarbonate (PC) resin, liquid crystal polymer (LCP) resin and the like) that can be subjected to heat staking or ultrasonic staking. Also, the wire holding member 15A is attached to the side surface on the side in which a pair of terminals 9C of the powering member 9 is projected from the drive module 1, and the wire holding member 15B is attached to the side surface on the side in which the pair of terminals 9C of the powering member 9 is not projected from the drive module 1.
Furthermore, the wire holding members 15A, 15B are conductive members, such as metal plates, formed in a key shape with the end of the SMA wire 10 swaged to a wire holding part 15b. In the wire holding members 15A, 15B, through holes 36A, 36B are formed, into which the pins 35A, 35B of the module frame 5 is fitted, respectively. Also, under the through holes 36A, 36B in the axis direction, through holes 37A, 37B are formed, respectively, through which the adhesive is poured into the grooves 36. Then, arm parts 38A, 38B are formed in the wire holding members 15A, 15B, respectively. When the wire holding members 15A, 15B are secured to the module frame 5, the arm parts 38A, 38B touch the wall parts 35C of the module frame 5 to prevent the wire holding members 15A, 15B from moving rotationally. Fitting the wire holding members 15A, 15B into the locking grooves 5C and the pins 35A, 35B and causing the arm parts 38A, 38B to touch the wall parts 35C positions and holds the ends of the SMA wire 10.

The wire holding members 15A, 15B include a strip-shaped terminal part 15a on the side opposite to the wire holding part 15b (swaging point) for the SMA wire 10. When the wire holding members 15A, 15B are attached to the module frame 5, the terminal part 15a is slightly projected downward from the module sub-plate 8 stacked under the module frame 5.
The SMA wire 10 with both ends held by the pair of wire holding members 15A, 15B is locked from underneath by the tip hook 4D1 of the guide protrusion 4D of the lens frame 4 projected from the notch 5B of the module frame 5. The tension of the SMA wire biases upward the lens frame 4 via the tip hook 4D1.

As shown in Figs. 3 and 4, the upper flat spring 6 is stacked on the top of the module frame 5 and the lens frame 4 inserted into the module frame 5, and the lower flat spring 7 is stacked on the bottom of them.

The upper flat spring 6 and the lower flat spring 7 are flat plate-shaped flat spring members stamped into almost the same shape, consisting of, for example, a metal plate such as stainless (SUS) steel plate.

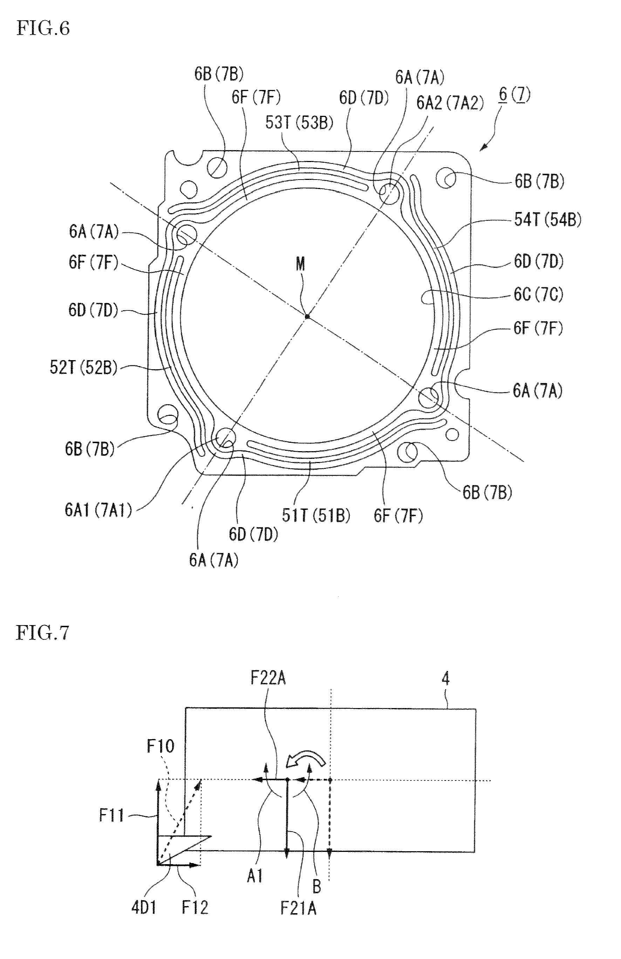

As shown in Fig. 6, the upper flat spring 6 (lower flat spring 7) is almost rectangular in outline in plan view similar to the top (bottom) end of the module frame 5, and is ring-shaped as a whole with a circular opening 6C (7C) formed coaxially with the axis line M in the center that is slightly larger than the inner circumference surface 4F of the lens frame 4.

Near the corners of the upper flat spring 6 (lower flat spring 7), four through holes 6B (7B) into which the upper securing pins 14A (lower securing pins 14B) formed near the corners of the module frame 5 can be inserted are formed at the positions corresponding to those of the upper securing pins 14A (lower securing pins 14B). This allows the module frame 5 to be positioned in a plane perpendicular to the axis line M.

Also, in the upper flat spring 6 (lower flat spring 7), four through holes 6A (7A) into which the upper securing pins 13A (lower securing pins 13B) formed on the lens frame 4 can be inserted are formed at the positions corresponding to those of the upper securing pins 13A (lower securing pins 13B).

Also, a ring part 6F (7F) is formed in the outer side in the radius direction of the opening 6C (7C). From positions near the through holes 6A (7A) opposite to each other in the diagonal direction with the axis line M therebetween, four slits 6D (7D) extend in an almost half arc in the circumference direction, overlapping in the radius direction by almost a quarter arc.

This forms four spring parts extended almost in a quarter-arc shape from the outer rectangular frame body of the upper flat spring 6 (lower flat spring 7). Among the four spring parts, with respect to a through hole 6A1 (7A1) formed at the position corresponding to that of the guide protrusion 4D, the spring part formed on the side in which the wire holding member 15B is disposed is referred to as a first spring part 51 T (51 B), and the spring part formed on the side in which the wire holding member 15A is disposed is referred to as a second spring part 52T (52B). Remaining two spring parts are referred to as a third spring part 53T (53B) and a fourth spring part 54T (54B) in a clockwise order from the second spring part 52T (52B). Specifically, with respect to a through hole 6A2 (7A2) formed opposite to the through hole 6A1 (7A1) formed at the position corresponding to that of the guide protrusion 4D with the opening 6C (7C) therebetween, the spring part formed on the side in which the wire holding member 15A is disposed is referred to as the third spring part 53T (53B), and the spring part formed on the side in which the wire holding member 15B is disposed is referred to as the fourth spring part 54T (54B).

Thus, the upper flat spring 6 (lower flat spring 7) is formed rectangular in outline so as to be almost the same as the outline of the module frame 5, and the first spring part 51 T (51 B) to fourth spring part 54T (54B) and the ring part 6F (7F) are formed in the ring-shaped area along the opening 6C (7C). Also, since the through holes 6B (7B) to be secured are provided in the corners having a space according to the arrangement of the upper securing pins 14A (lower securing pins 14B) securing the upper flat spring 6 (lower flat spring 7) to the module frame 5, the through holes 6B (7B) can be away from the first spring part 51 T (51 B) to fourth spring part 54T (54B), which facilitates manufacturing by precise stamping or etching.

Note that, in this embodiment, the first spring part 51T (51 B) and second spring part 52T (52B) are formed to be larger in board thickness than the third spring part 53T (53B) and fourth spring part 54T (54B). In order to partially change the board thickness like this, the upper flat spring 6 (lower flat spring 7) may be manufactured by half-etching, for example. Also, the first spring part 51 T (51 B) and the second spring part 52T (52B) are configured with the same board thickness. The third spring part 53T (53B) and the fourth spring part 54T (54B) are configured with the same board thickness. With this configuration, the spring constant of the first spring part 51 T (51 B) and second spring part 52T (52B) is larger than that of the third spring part 53T (53B) and fourth spring part 54T (54B).

Next, with the lower securing pins 14B of the module frame 5 passing through the through holes 7B of the lower flat spring 7 and the lower securing pins 13B of the lens frame 4 contained in the module frame 5 passing through the through holes 7A of the lower flat spring 7, the module sub-plate 8 is stacked on the module frame 5 sandwiching therebetween the lower flat spring 7 from underneath, thereby pressingly securing the rectangular outer frame of the lower flat spring 7 to the end faces 5b of the module frame 5.

The module sub-plate 8 is a plate-shape member having almost the same rectangular outline as the outline of the module frame 5 with an almost circular opening 8A formed coaxially with the axis line M by boring through the center in the thickness direction. On a top surface 8a side onto which the lower flat spring 7 is stacked in assembling, four U-shaped concave portions 8B for avoiding the interference with staked portions (described later) are formed at the positions corresponding to those of the lower securing pins 13B of the lens frame 4. Also, in the corners located on the outer edge of the module sub-plate 8, through holes 8C into which the lower securing pins 14B of the module frame 5 can be inserted are formed at the positions corresponding to those of the lower securing pins 14B. For the material of the module sub-plate 8, an electrically insulative and light-blocking synthetic resin is used, for example. The electrically insulative module sub-plate 8 functions as an insulative member for securing powering member 9 to the lower flat spring 7 while electrically insulating the powering member 9 from the lower flat spring 7.

The powering member 9 consists of a pair of electrodes 9a, 9b each consisting of a plate-shaped metal plate. Each of the electrodes 9a, 9b consists of a polygonally curved metal plate including an almost L-shaped wiring part 9B along the outline of the module sub-plate 8 and a terminal part 9C projecting from the end of the wiring part to the outside of the outline of the module sub-plate 8. In each of the wiring part 9B, two through holes 9A are provided that position the electrode 9a (or 9b) to the module frame 5 by allowing the two lower securing pins 14B adjacent to each other along the outline of the module sub-plate 8 among the lower securing pins 14B of the module frame 5 projecting downward from the bottom surface of the module sub-plate 8 to be inserted into the two through holes 9A.

As shown in Fig. 4, the terminal parts 9C of the electrodes 9a, 9b are provided so as to project downward in parallel in the axis direction from the side surface of the module frame 5 on which the wire holding member 15A is attached. Accordingly, a conductively connecting part 9D is provided in the electrode 9a on the side surface of the wiring part 9B between one of the through holes 9A and the terminal part 9C, which is concavely notched to electrically connect to the terminal part 15a of the wire holding member 15A.

On the other hand, a notched conductively connecting part 9D is formed in the electrode 9b at the connecting point with the terminal part 15a of the wire holding member 15B on the side surface of the wiring part 9B. At this conductively connecting part 9D, the electrode 9b and the wire holding member 15B are electrically connected.

In order to electrically connect each conductively connecting part 9D to the terminal part 15a, soldering or adhesion using a conductive adhesive can be used, for example.

Returning to Fig. 2, the cover 11 is a member in which: a side wall part 11 D that can be fitted outside the module frame 5 to cover the same is extended downward from the outer edge of a top surface 11 E; a rectangular opening 11 C is formed on the bottom side; and a circular opening 11A with its center on the axis line M is provided in the center of a top surface 11E. The opening 11A is large enough for the lens unit 12 to be taken in and out, for example.

An assembling method of the drive module 1 configured as described above is described step by step.

In the first step, the lens frame 4 is inserted from underneath into the containing part 5A of the module frame 5, and the end faces 5a of the module frame 5 and the end face 4a of the lens frame 4 are aligned at the same level. Then, the upper securing pins 14A of the module frame 5 and the upper securing pins 13A of the lens frame 4 are inserted into the through holes 6B and 6A of the upper flat spring 6, respectively.
Then, the tips of the upper securing pins 13A, 14A projected upward through the through holes 6A, 6B of the upper flat spring 6 are heat staked by heater tips (not shown) to form staked portions 16 as first securing parts and staked portions 17 as second securing parts, respectively (see Figs. 4 and 5).
At this time, since the end face 4a of the lens frame 4 and the end faces 5a of the module frame 5 are arranged on the same plane, the plate-shaped upper flat spring 6 can be placed with no deformation and heat staked. This eliminates the need for pressing against the deformed upper flat spring 6, facilitating heat staking. Also, the upper flat spring 6 can be prevented from bending upward due to deformation.

Also, since the heater chips can be set at the same level, a variation in staking accuracy can be reduced even when the staked portions 16, 17 are formed at the same time.

Next, in the second step, the lower securing pins 13B of the lens frame 4 are inserted into the through holes 7A of the lower flat spring 7. At the same time, the lower securing pins 14B of the module frame 5 are inserted into the through holes 7B of the lower flat spring 7, the through holes 8C of the module sub-plate 8, and the through holes 9A of the powering member 9. Then, the tips of the lower securing pins 13B projected downward through the through holes 7A of the lower flat spring 7 are heat staked by heater tips to form staked portions 18 as first securing parts (see Fig. 5).

At this time, since the distance in the axis direction between the end faces 4a and 4b of the lens frame 4 is equal to that between the end faces 5a and 5b of the module frame 5, the end face 4b and the end faces 5b are arranged on the same plane. So, the module sub-plate 8 can be stacked and heat staked without deforming the plate-shaped lower flat spring 7, which can prevent the lower flat spring 7 from bending upward due to deformation.

Also, since the heater chips can be set at the same level, a variation in staking accuracy can be reduced even when the staked portions 18 are formed at the same time.

Next, in the third step, the tips of the lower securing pins 14B projected downward through the through holes 7B, 8C and 9A are heat staked by heater tips to form staked portions 19 as second securing parts (see Fig. 5).

At this time, since the heater chips can be set at the same level, a variation in staking accuracy can be reduced even when the staked portions 19 are formed at the same time.

Also, since the concave portions 8B are formed in the module sub-plate 8, the staked portions 18 formed in the second step are not in contact with the module sub-plate 8.

Through the first to third steps, the upper flat spring 6, the lower flat spring 7, the module sub-plate 8 and the powering member 9 are stacked and secured to the both ends of the lens frame 4 and the module frame 5.

Note that, for staking in the first to third steps, since the upper securing pins 13A and the lower securing pins 13B are provided coaxially with each other, the horizontal positions of heater tips for forming the staked portions 16 are the same as those for forming the staked portions 18. Also, since the upper securing pins 14A and the lower securing pins 14B are provided coaxially with each other, the horizontal positions of heater tips for forming the staked portions 17 are the same as those for forming the staked portions 19. This eliminates the need for changing heater tip positions for each staking, which can improve the efficiency of staking operation.

Next, in the fourth step (disposing step), the pair of wire holding members 15A, 15B to which the SMA wire 10 is attached are secured to the module frame 5. Specifically, the two pins 35A and 35B formed on the module frame 5 are fitted into the through holes 36A and 36B of the wire holding members 15A and 15B, respectively, and the wire holding members 15A, 15B are locked to the respective locking grooves 5C. At this time, the SMA wire 10 is stretched so that the center of the SMA wire 10 is locked to the tip hook 4D1 of the guide protrusion 4D and supports the tip hook 4D1 from underneath. The terminal part 15a of the wire holding members 15A, 15B is projected downward from the module sub-plate 8 and is locked to or disposed near the conductively connecting part 9D of the electrodes 9a, 9b of the powering member 9 secured to the module sub-plate 8.

Next, in the fifth step (securing step), thermosetting adhesive is poured through the through holes 37A, 37B to fill the grooves 36 of the module frame 5. When the grooves 36 are filled with the thermosetting adhesive, the assembly is put into a heating oven to cure the adhesive. After the assembly is heated in the heating oven, for example, at about 100° for 20 or 30 minutes or so, the adhesive is cured to adhesively secure the wire holding members 15A, 15B to the module frame 5.

After the wire holding members 15A, 15B are adhesively secured to the module frame 5, the terminal part 15a of the wire holding members 15A, 15B is electrically connected to the conductively connecting part 9D using, for example, soldering or conductive adhesive.

Next, in the sixth step, the cover 11 is applied over the module frame 5, and the side wall part 11D is connected to the module sub-plate 8. For example, the side wall part 11 D may be connected to the module sub-plate 8 by providing an engagement claw to the side wall part 11D to fit into the module sub-plate or by adhering or welding. The staked portions 16, 17 are spaced from the rear surface of the top surface 11E of the cover 11.

Thus, the assembling of the main body of the drive module 1 is completed.

Then, the adapter 30 is attached to the bottom of the drive unit 31, and then, they are mounted on the board. The drive module 1 may be mounted on the board by securing means such as adhering or fitting. Note that the board may be a standalone member supplied with the drive module 1 or may be a member connected to and placed in an electronic device or the like.

Furthermore, the lens unit 12 is attached by screwing into the lens frame 4 through the opening 11Aof the cover 11. Thus, the lens unit 12 is finally attached so as to avoid the contamination of or dust adhesion to the lens unit 12 through the assembling work. However, for example, when the drive module 1 needs to be shipped as a product with the lens unit 12 attached or when the opening 11A of the cover 11 needs to be smaller than the outline of the lens unit 12, for example, the opening 11A also functions as an aperture stop, the lens unit 12 may be attached earlier (than the sixth step).

Next, the operation of the drive module 1 is described.

In the drive module 1 without power supplied to the terminal parts 9C, the tension of the SMA wire 10 and the force acting on the lens frame 4 at the staked portions 16, 18 (restoring force of the upper flat spring 6 and the lower flat spring 7 and the like) are balanced, which holds the lens frame 4 with the lens unit 12 attached at a constant position in the axis direction.

When power is supplied to the powering member 9 through the terminal parts 9C, current flows in the SMA wire 10 because, for example, the electrode 9a, the wire holding member 15A, the SMA wire 10, the wire holding parts 15b and the electrode 9b are individually conductive. This generates joule heat in the SMA wire 10 to increase the temperature of the SMA wire 10. Then, when the transformation start temperature of the SMA wire 10 is exceeded, the SMA wire 10 contracts to a length depending on the temperature.

As a result, the guide protrusion 4D of the lens frame 4 is moved upward (in the (A) direction in Figs. 4 and 5). Note that, in this embodiment, the first spring part 51 T (51 B) and second spring part 52T (52B) located on both sides of the tip hook 4D1 locking the SMA wire 10 are formed to be larger in board thickness than the third spring part 53T (53B) and fourth spring part 54T (54B) so that the spring constant of the first spring part 51 T (51 B) and second spring part 52T (52B) is larger than that of the third spring part 53T (53B) and fourth spring part 54T (54B).

With this configuration, the amount of deformation of the first spring part 51 T (51 B) and second spring part 52T (52B) when the SMAwire 10 contracts to lift the lens frame 4 can be smaller. As shown in Fig. 7, this can shift a force F21A in the axis direction and a force F22A in the horizontal direction generated in the lens frame 4 from the center of gravity of the lens frame 4 toward the tip hook 4D1 when the SMA wire 10 contracts to generate the force F10 (F11 in the axis direction and F12 in the horizontal direction). Then, the distance between the forces F11 and F21A in the axis direction is reduced, which allows the magnitude of a moment A1 to be smaller than that of the moment A. Accordingly, the moment to lift the tip hook 4D1 side of the lens frame 4 can be reduced to prevent the lens frame 4 from tilting.
Then, the upper flat spring 6 and the lower flat spring 7 individually deform to apply elastic restoring forces depending on the respective amount of deformation to the lens frame 4. Then, the lens frame 4 stops at the position where the elastic restoring forces and the tension of the SMA wire 10 are balanced.

Note that, since the upper flat spring 6 and lower flat spring 7 are parallel springs, the lens frame 4 is moved along the axis line M without a guide member in the axis direction. Also, since no sliding load due to the guide member occurs, low power consumption can be achieved.

When power supply is stopped, the SMA wire 10 can extend and the lens frame 4 is moved downward (in the (B) direction in Figs. 4 and 5) to the balanced position. In this way, the lens frame 4 can be driven in the axis line M direction by controlling the amount of supplied power.

According to this embodiment, since the spring constant of the first spring part 51 T (51 B) and second spring part 52T (52B) located on both sides of the tip hook 4D1 locking the SMA wire 10 is larger than that of the third spring part 53T (53B) and fourth spring part 54T (54B), the tip hook 4D1 side of the lens frame 4 is less movable than the opposite side in the radius direction. This can prevent the amount of movement (lift) of the tip hook 4D1 of the lens frame 4 from increasing to tilt the lens frame 4. Thus, the lens frame 4 can be moved along the axis direction without tilting. This can be achieved without increasing the number of parts, only by partially adjusting the spring constant of the upper flat spring 6 (lower flat spring 7) as described above, which can keep the drive module 1 compact.

Furthermore, the lens frame 4 can be moved only by providing the SMA wire 10 and causing it to contract. Thus, the lens frame 4 can be moved with a simple configuration.
Furthermore, the spring constant of the first spring part 51 T (51 B) and second spring part 52T (52B) can be larger than that of the third spring part 53T (53B) and fourth spring part 54T (54B) only by forming the first to fourth spring parts so that the first spring part 51T (51 B) and second spring part 52T (52B) is larger in board thickness than the third spring part 53T (53B) and fourth spring part 54T (54B). Thus, the upper flat spring 6 (lower flat spring 7) may be manufactured by half-etching, or only the first spring part 51 T (51 B) and second spring part 52T (52B) may be manufactured by stacking plate materials. That is, the upper flat spring 6 (lower flat spring 7) having desirable performance can be manufactured easily.

Furthermore, the first spring part 51 T (51 B) and the second spring part 52T (52B) are configured to have the same spring constant, and the third spring part 53T (53B) and the fourth spring part 54T (54B) are configured to have the same spring constant, which can prevent the lens frame 4 from moving in the direction perpendicular to the axis direction (horizontal direction). Thus, the lens frame 4 can be more surely moved along the axis direction without tilting.

Furthermore, the upper flat spring 6 and the lower flat spring 7 are configured to have the same spring constant using flat spring members almost in the same shape. Thus, the lens frame 4 can be stably moved along the axis direction without tilting. Also, for example, flat spring members in the same shape can be used, which can prevent the manufacturing cost from increasing.

Next, a first variation of the first embodiment is described. Note that the configuration of the first variation is almost the same as that of the first embodiment except that the shape of the upper and lower flat springs is different.

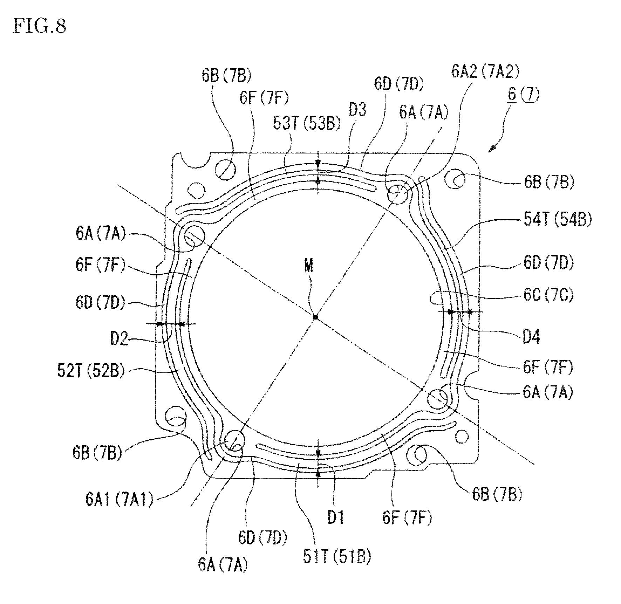

Fig. 8 is a plan view of an upper flat spring (lower flat spring) in accordance with the first variation of the first embodiment. As shown in Fig. 8, in the upper flat spring 6 (lower flat spring 7) of the first variation, unlike the above-described embodiment, the board thickness of the spring part of the first spring part 51 T (51 B) to fourth spring part 54T (54B) is the same. However, the width D1 of the first spring part 51 T (51 B) and the width D2 of the second spring part 52T (52B) are larger than the width D3 of the third spring part 53T (53B) and the width D4 of the fourth spring part 54T (54B). Note that the width D1 and width D2 are the same, and the width D3 and the width D4 are the same. Thus, the spring constant of the first spring part 51 T (51 B) and second spring part 52T (52B) is larger than that of the third spring part 53T (53B) and fourth spring part 54T (54B).
This configuration provides almost the same operation and effect as the above-described first embodiment, and enlarging the width D1 of the first spring part 51 T (51 B) and the width D2 of the second spring part 52T (52B) can prevent the lens frame 4 from moving in the direction perpendicular to the axis direction (horizontal direction). Thus, the lens frame 4 can be more surely moved along the axis direction without tilting.

Next, a second variation of the first embodiment is described. Note that the configuration of the second variation is almost the same as that of the first embodiment except that the shape of the upper and lower flat springs is different.

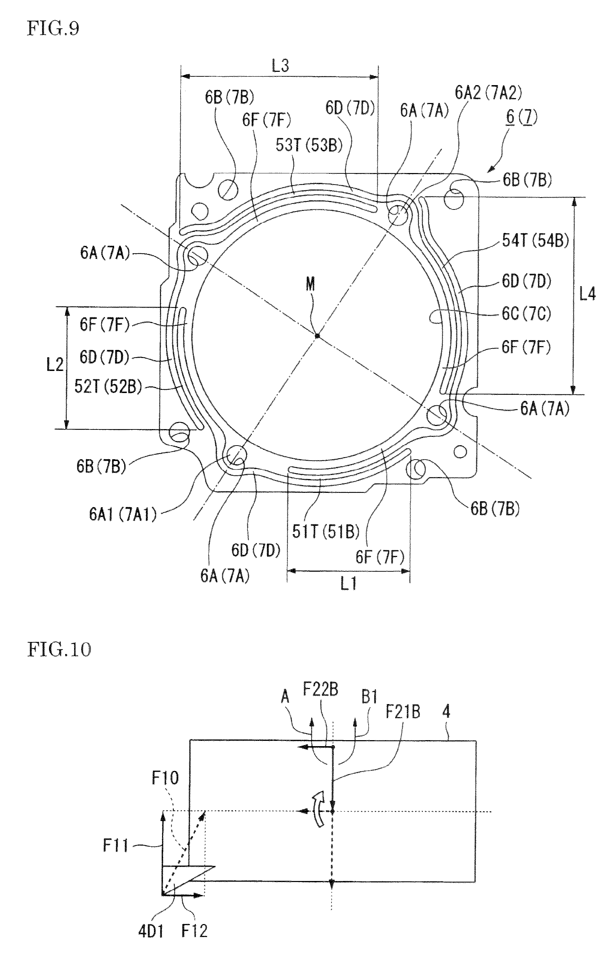

Fig. 9 is a plan view of an upper flat spring (lower flat spring) in accordance with the second variation of the first embodiment. As shown in Fig. 9, in the upper flat spring 6 (lower flat spring 7) of the second variation, unlike the above-described embodiment, the board thickness of the spring part of the first spring part 51 T (51 B) to fourth spring part 54T (54B) is the same. However, the length L1 of the first spring part 51 T (51 B) and the length L2 of the second spring part 52T (52B) are shorter than the length L3 of the third spring part 53T (53B) and the length L4 of the fourth spring part 54T (54B). Note that the length L1 and length L2 are the same, and the length L3 and the length L4 are the same. Thus, the spring constant of the first spring part 51 T (51 B) and second spring part 52T (52B) is larger than that of the third spring part 53T (53B) and fourth spring part 54T (54B).
This configuration provides almost the same operation and effect as the above-described first embodiment.

### (Second embodiment)

Now, a drive module in accordance with a second embodiment of the invention is described with reference to Fig. 10. Note that the configuration of this embodiment is almost the same as that of the first embodiment except that the configuration of the upper and lower flat springs is different. So, the same parts are denoted by the same numerals, and will not be repeatedly described in detail.

In this embodiment, for the upper flat spring 6, as with the first embodiment, for example, the first spring part 51 T and second spring part 52T are formed to be larger in board thickness than the third spring part 53T and fourth spring part 54T so that the spring constant of the first spring part 51 T and second spring part 52T is larger than that of the third spring part 53T and fourth spring part 54T.

On the other hand, for the lower flat spring 7, as with the prior art, the board thickness of the first spring part 51 B to fourth spring part 51 B is the same. Also, the board thickness of the third spring part 53T and the fourth spring part 54T of the upper flat spring 6 is the same as that of the first spring part 51 B to fourth spring part 51 B of the lower flat spring 7. With this configuration, the spring constant of the upper flat spring 6 is larger than that of the lower flat spring 7.
With this configuration, the amount of deformation of the first spring part 51 T and second spring part 52T of the upper flat spring 6 when the SMA wire 10 contracts to lift the lens frame 4 can be smaller. As shown in Fig. 10, this can shift a force F21 B in the axis direction and a force F22B in the horizontal direction generated in the lens frame 4 from the center of gravity of the lens frame 4 toward the upper flat spring 6 when the SMA wire 10 contracts to generate the force F10 (F11 in the axis direction and F12 in the horizontal direction). Then, the distance between the forces F12 and F22B in the horizontal direction is increased, which allows the magnitude of a moment B1 to be larger than that of the moment B. Accordingly, the moments A and B1 acting on the lens frame 4 cancel each other, which allows the moment acting on the lens frame 4 to be reduced to prevent the lens frame 4 from tilting.

Now, an electronic device in accordance with an embodiment of the invention is described.

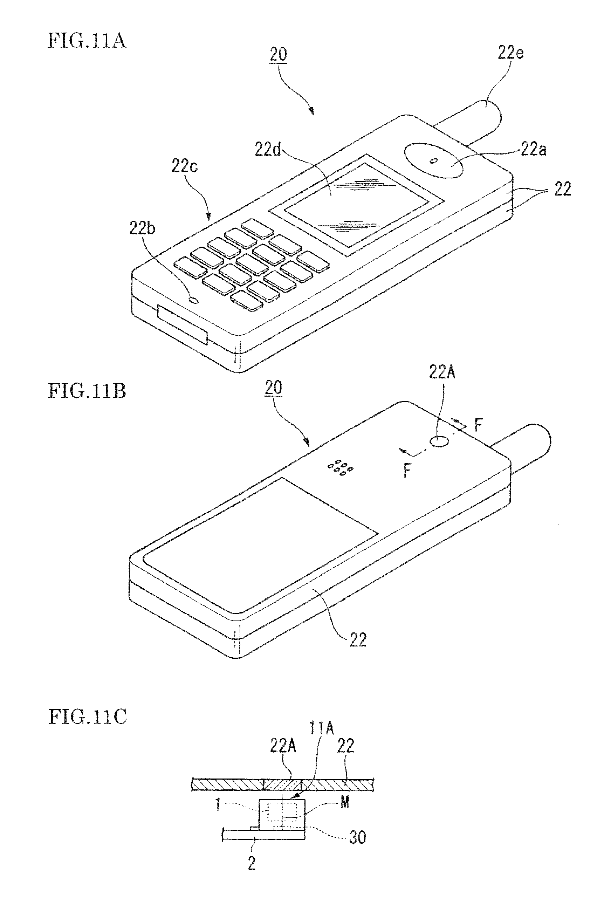

Figs. 11 (a) and 11 (b) are perspective appearance views illustrating the front face and rear face of the electronic device in accordance with the embodiment of the invention. Fig. 11 (C) is a cross-sectional view along the line F-F in Fig. 11 (b).

A camera-equipped mobile phone 20 of this embodiment shown in Figs. 11(a) and 11(b) is an example of the electronic device including the drive module 1 of the above-described embodiment.

The camera-equipped mobile phone 20 has a known mobile phone device configuration inside and outside a cover 22 including a receiver 22a, a transmitter 22b, an operation area 22c, a liquid crystal display 22d, an antenna 22e and a controller (not shown).

As shown in Fig. 11(b), a window 22A for allowing outside light to pass through is provided on the rear side of the cover 22 opposite the liquid crystal display 22d. As shown in Fig. 11(c), the drive module 1 of the above-described embodiment is installed such that the opening 11A of the drive module 1 faces outwardly through the window 22A of the cover with the axis line M along the direction of the normal to the window 22A.

The drive module 1 is mechanically and electrically connected to a board 2. The board 2 is connected to the controller (not shown) and can supply power to the drive module 1.

According to this configuration, the lens unit 12 (not shown) of the drive module 1 can collect light passing through the window 22A to form an image on a imaging device 30. Then, with appropriate power supplied from the controller to the drive module 1, the lens unit 12 can be driven in the axis line M direction to adjust a focal position and perform shooting.

The camera-equipped mobile phone 20 includes the compact drive module 1 that can move the lens frame 4 in the axis direction without tilting it, which can facilitate keeping the camera-equipped mobile phone 20 compact and can provide the camera-equipped mobile phone 20 that includes the high precision drive module 1 and functions with high precision.

Note that the invention is not limited to the above-described embodiment, but embraces various changes to the above-described embodiments without departing from the spirit of the invention. That is, the specific structure, configuration and the like described in the embodiments are just an example and can be changed as appropriate.
For example, in the embodiments, the upper securing pins 13A, 14A and the lower securing pins 13B, 14B are inserted into the upper flat spring 6 and the lower flat spring 7 that are the flat spring members for biasing the lens frame 4, and then, the tips of these securing pins are heat staked. However, the method for securing the flat spring members is not limited to this. For example, the flat spring members may be secured by ultrasonic staking or the like or may be adhered to the lens frame 4 and the module frame 5. According to the structure in the embodiments, a large adhesion area can be reserved, so adhesive can provide sufficient strength.

In the above description, the module frame 5 is a member almost rectangular as a whole. However, the module frame 5 is not limited to be almost rectangular, but may be polygonal.

In the embodiments, the lens frame 4 is driven using the SMA wire 10. The embodiments may be applied to an arrangement in which a piezoelectric element or voice coil motor may be used to partially act on the lens frame 4.

In the embodiments, the upper flat spring 6 and the lower flat spring 7 are flat spring members in an almost rectangular shape in plan view with the spring supports at the four corners. However, the flat spring members may be such that spring parts are formed at the four corners (formed along the diagonal lines from the four corners) and the spring supports are formed at the midpoint of the straight portion of the almost rectangular shape, or may be such that three spring parts are provided at 120 degree intervals with respect to an almost circular opening. Thus, the number of spring parts and spring supports formed in the flat spring members is not limited, but the same effect as the embodiments can be obtained by adjusting individual spring constants so that the resultant force of the springs acts on the lens frame 4 with an allocation as described above.

In the above description, the drive module 1 is used to adjust a focal position of the lens unit as an example. However, the application of the drive module is not limited to this. For example, the drive module may be used for another part as an appropriate actuator for moving a driven body to a target position. For example, the drive module may be used as an appropriate actuator with a rod member instead of the lens unit 12 screwed or the lens frame 4 changed to another shape. Thus, the driven body is not limited to a cylindrical member, but may also be a columnar member.

In the above description, the camera-equipped mobile phone is taken as an example of an electronic device using the drive module. However, the type of the electronic device is not limited to this. For example, the drive module may be used for an optical divide such as a digital camera and built-in PC Camera or may be used as an actuator for moving a driven body to a target position in an electronic apparatus such as information reader/storage or printer.

### Description of Reference Numerals and Signs

1 ··· drive module, 4 ··· lens frame (driven body), 5 ··· module frame (supporting body), 6 ··· upper flat spring (flat spring member), 6A1,7A1 ··· through holes (first support), 6A2, 7A2 ··· through holes (second support), 6C, 7C ··· opening, 7 ··· lower flat spring (flat spring member), 10 ··· SMA wire (shape-memory alloy wire, drive means), 20 ··· camera-equipped mobile phone (electronic device), 51 T, 51 B ··· first spring part, 52T, 52B ··· second spring part, 53T, 53B ··· third spring part, 54T, 54B ··· fourth spring part

## Claims

1. A drive module comprising:
a cylindrical or columnar driven body;
a cylindrical supporting body for containing the driven body therein;
a flat spring member for elastically holding the driven body movably along a certain direction with respect to the supporting body; and
a drive means for driving the driven body against a restoring force of the flat spring member,
**characterized in that** the spring constant of the side of the flat spring member on which a force generated by the drive means acts is larger than that of the opposite side on which the force generated by the drive means acts through the driven body.

2. The drive module according to claim 1, **characterized in that** the drive means comprises a shape-memory alloy wire that is engaged with the driven body and, when powered, is displaced by heat to drive the driven body against the restoring force of the flat spring member.

3. The drive module according to claim 1,
**characterized in that** the flat spring member comprises: an opening corresponding to the outline of the driven body; a first spring part and second spring part formed along the opening by almost a quarter arc for each spring part centering a first support that is a point of action on which the force generated by the drive means acts; and a third spring part and fourth spring part formed along the opening by almost a quarter arc for each spring part centering a second support that is formed opposite to the first support with the opening therebetween,
and **characterized in that** the thickness of the first spring part is larger than that of the third spring part.

4. The drive module according to claim 1,
**characterized in that** the flat spring member comprises: an opening corresponding to the outline of the driven body; a first spring part and second spring part formed along the opening by almost a quarter arc for each spring part centering a first support that is a point of action on which the force generated by the drive means acts; and a third spring part and fourth spring part formed along the opening by almost a quarter arc for each spring part centering a second support that is formed opposite to the first support with the opening therebetween,
and **characterized in that** the width of the first spring part is larger than that of the third spring part.

5. The drive module according to claim 1,
**characterized in that** the flat spring member comprises: an opening corresponding to the outline of the driven body; a first spring part and second spring part formed along the opening by almost a quarter arc for each spring part centering a first support that is a point of action on which the force generated by the drive means acts; and a third spring part and fourth spring part formed along the opening by almost a quarter arc for each spring part centering a second support that is formed opposite to the first support with the opening therebetween,
and **characterized in that** the length of the first spring part is smaller than that of the third spring part.

6. The drive module according to claims 3 to 5, **characterized in that** the spring constant of the first spring part is the same as that of the second spring part, and the spring constant of the third spring part is the same as that of the fourth spring part.

7. The drive module according to claim 1, **characterized in that**:
the flat spring member is provided on the top and bottom surfaces of the driven body perpendicular to an axis direction along which the driven body is driven so that the restoring force of the flat spring member acts on the top and bottom surfaces of the driven body; and
the upper spring constant of the flat spring member provided on the top surface is the same as the lower spring constant of the flat spring member provided on the bottom surface.

8. The drive module according to claim 1, **characterized in that**:
the flat spring member is provided on the top and bottom surfaces of the driven body perpendicular to an axis direction along which the driven body is driven so that the restoring force of the flat spring member acts on the top and bottom surfaces of the driven body; and
the upper spring constant of the flat spring member provided on the top surface is larger than the lower spring constant of the flat spring member provided on the bottom surface.

9. An electronic device **characterized by** comprising the drive module according to claim 1.
